# FASCICULE DE BREVET EUROPEEN

(11) **EP 4 078 042 B1**
(45) Date de publication et mention de la délivrance du brevet: **20.11.2024**
(21) Numéro de dépôt: 20841980.4
(22) Date de dépôt: 07.12.2020
(51) Int. Cl.: F24H 1/00, F24H 9/20, H05B 1/02, B60H 1/22

(54) **DISPOSITIF DE CHAUFFAGE DE FLUIDE, NOTAMMENT DESTINÉ A UN VÉHICULE**
FLUIDHEIZVORRICHTUNG, INSBESONDERE FÜR EIN FAHRZEUG
FLUID-HEATING DEVICE, IN PARTICULAR INTENDED FOR A VEHICLE

(30) Priorité: 18.12.2019 FR 1914697
(43) Date de publication de la demande: 26.10.2022
(73) Titulaire: VALEO SYSTEMES THERMIQUES, 78320 Le Mesnil-Saint-Denis (FR)
(72) Inventeur: DECOOL, Laurent, 78320 Le Mesnil-Saint-Denis (FR); FOURNIER, Jonathan, 78320 Le Mesnil-Saint-Denis (FR); SIFFREIN-BLANC, Nicolas, 78320 Le Mesnil-Saint-Denis (FR)
(74) Mandataire: Valeo Systèmes Thermiques
(86) Numéro de dépôt international: PCT/FR2020/052291
(87) Numéro de publication internationale: WO 2021/123545

(56) Documents cités:
- EP-A1- 2 884 519
- DE-T5- 112014 006 219
- JP-A- H10 157 446
- US-A1- 2015 122 899

## Description

L'invention concerne un dispositif de chauffage de fluide, notamment destiné à un véhicule, plus particulièrement pour une installation de ventilation, de chauffage et/ou de climatisation de l'habitacle du véhicule et/ou la thermo-régulation d'une batterie. Il pourra s'agir notamment d'un véhicule électrique ou hybride pouvant être autonome. Le document DE112014006219T5 divulgue un dispositif de chauffage de fluide dans un véhicule électrique ou hybride.

Il est connu d'assurer le chauffage de l'air destiné au traitement thermique de l'habitacle d'un véhicule par échange de chaleur entre un flux d'air et un liquide caloporteur, par le biais d'un échangeur thermique. Dans le cas des véhicules hybrides ou électriques, on connaît des dispositifs de chauffage électrique qui forment une source de calories et dans lesquels on fait circuler un courant électrique pour faire monter en température des éléments électriques chauffants mis au contact du liquide caloporteur. Il s'effectue alors un échange de calories entre les éléments électriques chauffants et le liquide caloporteur qui chauffe à son tour avant de chauffer l'habitacle grâce à l'échangeur.

Pour prévenir toute surchauffe, il est connu du document EP 2 884 519 d'utiliser un moyen d'ouverture du circuit d'alimentation des éléments électriques chauffants. Ledit moyen est actionné par déformation d'un bilame placé au contact desdits éléments électriques chauffants. Le bilame se déforme lorsque la température des éléments électriques chauffants atteint un certain seuil prédéfini, et assure l'actionnement du moyen d'ouverture du circuit par l'intermédiaire d'une lamelle.

Une telle solution de prévention de surchauffe présente un inconvénient majeur lié au fait que le bilame, pour être positionné correctement par rapport aux éléments électriques chauffants, doit présenter une forme spécifique de construction onéreuse. De plus, l'encombrement résultant du couplage mécanique entre le bilame et le moyen d'ouverture par l'intermédiaire de la lamelle réduit la marge de manoeuvre pour le montage de l'ensemble dans le dispositif de chauffage, avec pour conséquence notamment le risque de positionner le bilame en dehors de la zone de chauffage maximal.

Il convient dès lors de trouver une solution de prévention de surchauffe des éléments électriques chauffants d'un dispositif de chauffage, qui soit d'une construction simple et d'un montage facile dans ledit dispositif de chauffage.

La présente invention a pour but de proposer au moins en partie une telle solution.

A cet effet, l'invention a pour objet un dispositif de chauffage électrique de fluide, notamment pour un véhicule automobile, selon la revendication 1. Ce dispositif comprend au moins un élément électrique chauffant destiné à réchauffer le fluide, un capteur de température destiné à donner une information sur la température du fluide, un circuit d'alimentation dudit ou desdits éléments électriques chauffants, un commutateur, dit d'appel de courant, destiné à provoquer un appel de courant dans un circuit d'alimentation dudit ou desdits éléments électriques chauffants, un moyen d'ouverture dudit circuit en cas d'apparition dudit appel de courant, le capteur de température et le commutateur d'appel de courant étant positionnés indépendamment l'un de l'autre, le dispositif de chauffage étant configuré pour transmettre un signal du capteur de température vers le commutateur d'appel de courant, le dispositif de chauffage comprenant une ligne de court-circuit en parallèle avec l'élément électrique chauffant, le commutateur d'appel de courant étant monté sur ladite ligne de court-circuit, ladite ligne de court-circuit comprenant une première extrémité et une deuxième extrémité, le dispositif de chauffage comprenant en outre un commutateur amont et un commutateur aval reliés en série avec l'élément électrique chauffant, ledit élément électrique chauffant étant positionné entre ledit commutateur amont et ledit commutateur aval, l'un au moins desdits commutateurs amont et aval étant configuré pour réguler un courant circulant dans ledit élément électrique chauffant.

Avec un capteur de température monté indépendamment du commutateur d'appel de courant, le montage de la solution de prévention de surchauffe est simplifié en permettant de positionner chacun de ces composants à l'endroit pertinent choisi.

L'invention peut également comprendre l'une quelconque des caractéristiques suivantes, prises individuellement ou selon toutes combinaisons techniquement possibles qui forment autant de modes de réalisation de l'invention :
- le dispositif de chauffage comprend un moyen de transmission du signal entre le capteur de température et le commutateur d'appel de courant ;
- le moyen de transmission du signal comprend un conducteur électrique ;
- le dispositif de chauffage comprend un microcontrôleur apte à contrôler le commutateur d'appel de courant ;
- le moyen de transmission assure la liaison entre le capteur de température et le microcontrôleur ;
- le commutateur amont et le commutateur aval sont reliés à une carte électronique de commande du courant circulant dans l'élément électrique chauffant ;
- le moyen d'ouverture du circuit comprend au moins un fusible ;
- le fusible est monté en série avec l' élément électrique chauffant ;
- le moyen d'ouverture du circuit est monté en amont du commutateur amont ou en aval du commutateur aval ;
- le moyen d'ouverture du circuit est configuré pour protéger l'élément électrique chauffant en cas de défaillance simultanée du commutateur amont et du commutateur aval ;
- la première extrémité de la ligne de court-circuit est positionnée entre l'élément électrique chauffant et le commutateur amont et/ou la deuxième extrémité de la ligne de court-circuit est positionnée entre l'élément électrique chauffant et le commutateur aval;
- la première extrémité de la ligne de court-circuit est positionnée en amont du commutateur amont, et/ou la deuxième extrémité de la ligne de court-circuit est positionnée en aval du commutateur aval;
- le moyen d'ouverture du circuit comprend au moins un fusible ;
- le fusible est monté en amont de la première extrémité de la ligne de court-circuit ou en aval de la deuxième extrémité de la ligne de court-circuit ;
- le fusible est monté en amont du commutateur d'appel de courant ;
- le fusible est monté en aval du commutateur d'appel de courant ;
- la carte électronique comprend une zone thermiquement isolée par rapport à une zone principale de ladite carte électronique ;
- le capteur de température est monté sur la zone isolée de la carte électronique ;
- le dispositif de chauffage comprend en outre un drain thermique entre une chambre de circulation du fluide et la carte électronique.

L'invention sera mieux comprise et d'autres détails, caractéristiques et avantages de l'invention apparaîtront à la lecture de la description suivante, faite à titre d'exemple non limitatif et en référence aux dessins annexés, dans lesquels :
- La figure 1 est une vue en coupe longitudinale d'un dispositif de chauffage selon l'invention;
- La figure 2 représente un schéma électrique du dispositif de chauffage selon l'invention dans un premier mode de réalisation ;
- La figure 3 représente un schéma électrique du dispositif de chauffage selon l'invention dans un deuxième mode de réalisation.

Il est tout d'abord à noter que sur l'ensemble des figures, les éléments similaires et/ou remplissant la même fonction sont indiqués par le même repère.

Par convention, sauf indication contraire, le qualificatif « longitudinal » s'applique à la direction dans laquelle s'étend la plus grande dimension du dispositif de chauffage électrique, le qualificatif « transversal » s'applique à une direction sensiblement perpendiculaire à la direction longitudinale, et le qualificatif « vertical » désigne la direction perpendiculaire à la fois à la direction longitudinale et à la direction transversale.

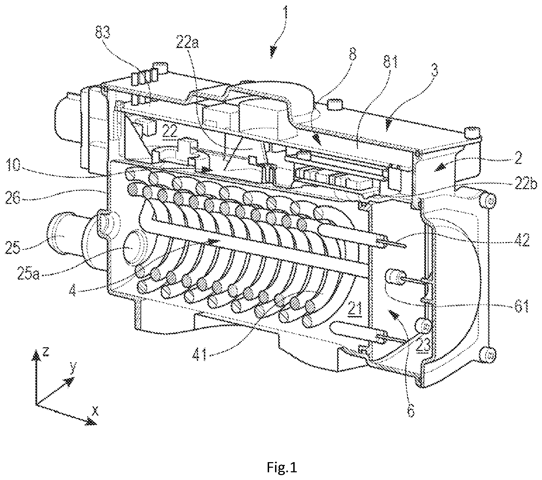

Par ailleurs, en référence aux orientations et directions définies précédemment, la direction longitudinale sera représentée par l'axe Ox, la direction transversale sera représentée par l'axe Oy, et la direction verticale sera représentée par l'axe Oz. Ces différents axes définissent ensemble un repère orthonormé Oxyz représenté à la figure 1. Dans ce repère, les qualificatifs "haut" ou "supérieur" seront représentés par le sens positif de l'axe Oz, les qualificatifs "bas" ou "inférieur" étant représentés par le sens négatif de ce même axe Oz.

Comme illustré à la figure 1, l'invention concerne un dispositif de chauffage 1. Ledit dispositif sert au chauffage d'un fluide, notamment d'un liquide caloporteur. Ledit dispositif comprend un boîtier 2 de circulation du fluide, au moins un élément chauffant 4, ici deux, un couvercle 6 portant le ou lesdits éléments chauffants, et une unité de commande 8 d'un courant d'alimentation dudit ou desdits éléments chauffants.

En particulier, le boîtier 2 définit une première chambre 21 de circulation du fluide, laquelle est agencée pour recevoir le ou les éléments électriques chauffants 4 de manière à ce que le fluide en circulation dans ledit boîtier soit mis au contact dudit ou desdits éléments électriques chauffants. Le boîtier 2 définit également une deuxième chambre 22 dans laquelle est logée l'unité de commande 8 du courant circulant dans le ou les éléments électriques chauffants 4. Enfin, le boîtier définit une troisième chambre 23 qui est séparée de la première chambre 21 au moyen du couvercle 6.

Le boîtier 2 est formé, par exemple, par moulage d'aluminium et/ou alliage d'aluminium.

Pour assurer la circulation du fluide dans la chambre 21, le boîtier 2 comprend au moins une première tubulure d'entrée (non représentée) et au moins une deuxième tubulure 25 de sortie en communication avec ladite chambre 21. La tubulure d'entrée et la tubulure de sortie 25 sont disposées d'un même côté du boîtier 2, ici au niveau d'un fond 26 du boîtier 2.

La tubulure de sortie 25 débouche directement dans la chambre 21 à travers une première lumière 25a. La tubulure d'entrée débouche dans la chambre 21 par une deuxième lumière formée à une extrémité de ladite chambre, à l'opposé du fond 26. La tubulure d'entrée comprend un canal longeant longitudinalement la chambre 21 et débouchant dans ladite chambre.

Chaque élément électrique chauffant 4 comprend une résistance blindée 41 disposée en spirale ainsi qu'au moins un terminal de connexion 42 destiné à relier ladite résistance à une source d'alimentation en courant. Lesdits éléments électriques chauffants 4 s'étendent longitudinalement dans le boîtier 2 à travers le couvercle 6.

Pour ce faire, le couvercle 6 comprend des ouvertures 61 dans lesquelles les éléments électriques chauffants 4 sont montés de telle manière que, pour chacun desdits éléments électriques, la résistance 41 s'étende dans la première chambre 21 et les terminaux 42 s'étendent à travers le couvercle 6 et débouchent dans la troisième chambre 23. La liaison entre ledit couvercle 6 et lesdits terminaux 42 est étanche.

La deuxième chambre 22 est située au-dessus de la première chambre 21, le long de celle-ci, et présente un bord supérieur obturé au moyen d'un capot supérieur 3. En outre, la deuxième chambre 22 comprend des projections verticales 22a ainsi qu'une plateforme 22b formées sur une paroi de séparation 10 entre ladite deuxième chambre et la première chambre 21.

Le dispositif de chauffage comprend en outre au moins un capteur de température 83 destiné à donner une information relative à la température du fluide et/ du ou des éléments électriques chauffants 4.

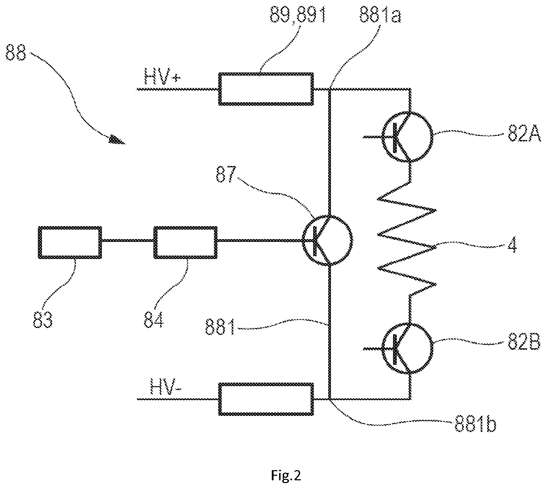

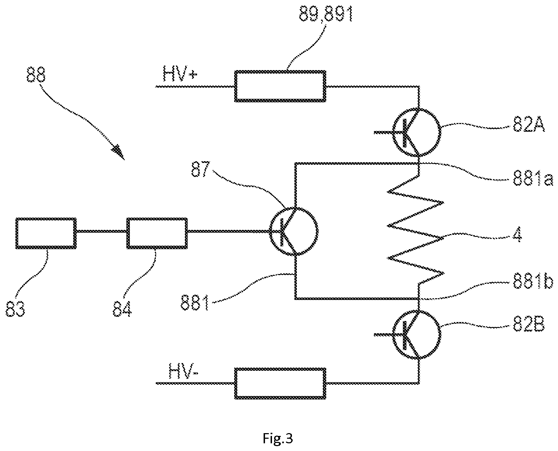

Comme illustré aux figures 2 et 3, le dispositif de chauffage comprend encore au moins un commutateur 87, dit d'appel de courant, destiné à provoquer un appel de courant dans un circuit d'alimentation 88 des éléments électriques chauffants 4, ainsi qu'au moins un moyen 89 d'ouverture dudit circuit en cas d'apparition dudit appel de courant. Les éléments électriques chauffants 4 sont montés en parallèle dans ledit circuit 88. Le ou les commutateurs 87 ainsi que le ou les moyens 89 d'ouverture du courant sont intégrés, par exemple, à l'unité de commande 8.

Selon l'invention, le capteur de température 83 et le commutateur 87 d'appel de courant forment deux composants distincts montés indépendamment l'un de l'autre.

Une telle dissociation permet de monter le capteur 83 à distance du commutateur 87 d'appel de courant, ledit capteur et ledit commutateur pouvant être positionnés chacun à différents endroits du dispositif de chauffage. De plus, une telle dissociation permet de prévoir une pluralité de capteurs de température et une pluralité de commutateurs d'appel de courant dans un même dispositif de chauffage.

Selon l'invention, le commutateur 87 d'appel de courant est monté sur une ligne de court-circuit 881 en parallèle avec un des éléments électriques chauffants 4, ladite ligne de court-circuit présentant une extrémité amont 881a et une extrémité aval 881b. La position amont et la position aval sont définies ici comme dans la suite par rapport au sens du courant.

Selon une caractéristique de l'invention, le commutateur 87 d'appel de courant réagit en cas de réception par le capteur thermique 83 d'une information relative au franchissement d'une température seuil par le fluide caloporteur et/ou les éléments électriques chauffants 4 en fermant la ligne de court-circuit 881, la ligne de court-circuit court-circuitant alors le ou les éléments électriques chauffant 4. La résistance du circuit d'alimentation diminue alors fortement ce qui provoque un appel de courant et actionne le moyen 89 d'ouverture. Celui-ci ouvre le circuit 88 et met le ou les éléments électriques chauffants 4 hors circuit.

Le moyen 89 d'ouverture du circuit 88 comprend au moins un fusible 891 qui est monté ou connecté en amont de la première extrémité 881a de la ligne de court-circuit 881 ou en aval de la deuxième extrémité 881b de la ligne de court-circuit 881.

Le circuit 88 d'alimentation comprend un ensemble de commutateurs 82 configurés pour réguler le courant circulant dans le ou les éléments électriques chauffants 4. Chaque élément électrique chauffant 4 est relié en série à un premier commutateur de régulation de courant, dit commutateur amont 82A, qui communique avec un générateur de modulation de largeur d'impulsion (de l'anglais Pulse Width Modulation PWM) de l'unité de commande 8 ; et un deuxième commutateur de régulation de courant, dit commutateur aval 82B, qui assure la sécurité dudit élément électrique chauffant 4 en cas de défaillance du commutateur amont 82A.

Les commutateurs 82 de régulation de courant sont choisis parmi les transistors bipolaires à grille isolée (de l'anglais Insulated Gate Bipolar Transistor - IGBT) et/ou les transistors à effet de champ à grille métal-oxyde (de l'anglais Metal Oxide Semiconductor Field Effect Transistor - MOSFET), connus pour leur capacité à gérer des puissances d'alimentation élevées requises dans une application de chauffage de véhicule électrique ou hybride.

Dans un circuit 88 comprenant un commutateur amont 82A et un commutateur aval 82B de régulation du courant circulant dans un élément électrique chauffant 4, le moyen 89 d'ouverture du circuit 88 selon l'invention intervient en cas de défaillance simultanée dudit commutateur amont et dudit commutateur aval. Ledit moyen 89 est positionné en amont du commutateur amont 82A ou en aval du commutateur aval 82B de l'élément électrique chauffant 4.

Par ailleurs, comme illustré à la figure 2, la première extrémité 881a de la ligne de court-circuit 881 est connectée au circuit 88 en amont du commutateur amont 82A et la deuxième extrémité 881b de la ligne de court-circuit 881 est connectée au circuit 88 en aval du commutateur aval 82B.

Toutefois, comme illustré à la figure 3, la première extrémité 881a de la ligne de court-circuit 881 peut être positionnée directement en amont de l'élément électrique chauffant 4, entre ledit élément électrique chauffant 4 et le commutateur amont 82A. La deuxième extrémité 881b de la ligne de court-circuit peut être positionnée directement en aval de l' élément électrique chauffant 4 entre ledit élément électrique chauffant et le commutateur aval 82B.

Un tel positionnement des extrémités 881a, 881b de la ligne de court-circuit 881 prévient l'actionnement du moyen 89 d'ouverture du circuit 88 en cas de déclenchement intempestif du commutateur 87. En effet, la ligne de court-circuit 881 ne court-circuite pas les commutateurs 82A, 82B qui, en fonctionnement normal, peuvent réguler le courant circulant dans le circuit 88.

Bien que la figure 3 représente le fusible 891 positionné en amont du commutateur amont 82A, il est tout à fait envisageable de prévoir un positionnement dudit fusible entre ledit commutateur amont et l'élément électrique chauffant 4. Un tel positionnement du fusible reste conforme à l'esprit de la présente invention.

De façon avantageuse, le capteur de température 83 peut être positionné sur une carte électronique 81, et en particulier sur une zone 812 thermiquement isolée par rapport à une zone principale 813 de ladite carte électronique. Le moyen 89 d'ouverture du circuit 88 peut alors être positionné sur ladite zone principale 813 ou sur tout autre support formé dans la deuxième chambre 22 du boîtier 2.

Avec un capteur de température 83 positionné sur la carte électronique 81, le relevé d' une image de la température du fluide contenu dans la première chambre 21 peut être réalisé à l'aide d'un drain thermique situé entre ladite première chambre et ladite carte électronique .

De façon avantageuse, la liaison entre le capteur de température 83 et le commutateur 87 d'appel de courant est assurée par un moyen de transmission de signal choisi. Il s'agit par exemple d'un moyen de transmission d'un signal de nature électrique, en particulier un conducteur électrique.

Le moyen de transmission de signal est configuré pour assurer également la liaison entre le capteur de température 83 et un des commutateurs amont 82A ou aval 82B en passant par un microcontrôleur 84, ledit microcontrôleur permettant de contrôler le fonctionnement du commutateur 87 d'appel de courant.

En cas de pluralité d'éléments électriques chauffants 4 montés en parallèle, un même moyen 89 d'ouverture du circuit 88, en particulier un même fusible 891, et/ou un même commutateur 87 d'appel de courant pourront être utilisés pour plusieurs, voire l'ensemble des éléments électriques chauffants. En effet, un court-circuit opéré sur un seul élément électrique chauffant suffit pour court-circuiter tous les autres éléments électriques chauffants du dispositif de chauffage, le courant passant par la ligne électrique de résistance minimale.

## Revendications

1. Dispositif de chauffage électrique de fluide, notamment pour véhicule automobile, comprenant :
- au moins un élément électrique chauffant (4) destiné à chauffer le fluide,
- un capteur de température (83) destiné à donner une information sur la température du fluide,
- un circuit (88) d'alimentation dudit ou desdits éléments électriques chauffants,
- un commutateur (87), dit d'appel de courant, destiné à provoquer un appel de courant dans ledit circuit (88) d'alimentation,
- un moyen (89) d'ouverture dudit circuit en cas d'apparition dudit appel de courant,
le capteur de température (83) et le commutateur (87) d'appel de courant étant positionnés indépendamment l'un de l'autre,
le dispositif de chauffage étant configuré pour transmettre un signal du capteur de température (83) vers le commutateur (87) d'appel de courant,
le dispositif de chauffage comprenant une ligne de court-circuit (881) en parallèle avec l'élément électrique chauffant (4),
ladite ligne de court-circuit comprenant une première extrémité (881a) et une deuxième extrémité (881b),
**caractérisé en ce que** le commutateur (87) d'appel de courant est monté sur ladite ligne de cour-circuit (881) et **en ce que**
le dispositif de chauffage comprend en outre un commutateur amont (82A) et un commutateur aval (82B) reliés en série avec l'élément électrique chauffant (4), ledit élément électrique chauffant étant positionné entre ledit commutateur amont (82A) et ledit commutateur aval (82B), l'un au moins desdits commutateurs amont et aval étant configuré pour réguler un courant circulant dans ledit élément électrique chauffant.

2. Dispositif de chauffage selon la revendication précédente, comprenant un moyen de transmission du signal entre le capteur de température (83) et le commutateur (87) d'appel de courant.

3. Dispositif de chauffage selon la revendication précédente, dans lequel le moyen de transmission du signal comprend un conducteur électrique.

4. Dispositif de chauffage selon la revendication précédente, comprenant un microcontrôleur (84) apte à contrôler le commutateur (87) d' appel de courant, et dans lequel le moyen de transmission du signal assure la liaison entre le capteur de température (83) et ledit microcontrôleur.

5. Dispositif de chauffage selon l'une quelconque des revendications précédentes, dans lequel la première extrémité (881a) de la ligne de court-circuit (881) est positionnée directement en amont de l'élément électrique chauffant (4), et/ou la deuxième extrémité (881b) de la ligne de court-circuit (881) est positionnée directement en aval dudit élément électrique chauffant (4).

6. Dispositif de chauffage selon l'une quelconque des revendications 1 à 4, dans lequel la première extrémité (881a) de la ligne de court-circuit (881) est positionnée en amont du commutateur amont (82A) et/ou la deuxième extrémité (881b) de la ligne de court-circuit (881) est positionnée en aval du commutateur aval (82B).

7. Dispositif de chauffage selon l'une quelconque des revendications précédentes, dans lequel le moyen (89) d'ouverture du circuit (88) comprend au moins un fusible (891) monté en amont de la première extrémité (881a) de la ligne de court-circuit (881) ou en aval de la deuxième extrémité (881b) de la ligne de court-circuit (881), ledit fusible étant configuré pour protéger l'élément électrique chauffant (4) en cas de défaillance simultanée du commutateur amont (82A) et du commutateur aval (82B).

8. Dispositif de chauffage selon l'une quelconque des revendications précédentes comprenant une chambre (21) de circulation du fluide et une carte électronique (81) de commande d'un courant électrique traversant le ou les éléments électriques chauffants (4), dans lequel le capteur de température (83) est monté sur ladite carte électronique (81), ledit dispositif comprenant en outre un drain thermique (9) entre ladite chambre (21) de circulation du fluide et ladite carte électronique (81).

## Patentansprüche

1. Elektrische Fluidheizvorrichtung, insbesondere für ein Kraftfahrzeug, umfassend:
- mindestens ein elektrisches Heizelement (4), das dazu bestimmt ist, das Fluid zu erhitzen,
- einen Temperatursensor (83), der dazu bestimmt ist, eine Information über die Temperatur des Fluids abzugeben,
- einen Versorgungskreis (88) zur Versorgung des oder der elektrischen Heizelemente,
- einen Schalter (87), Stromstoßschalter genannt, der dazu bestimmt ist, einen Stromstoß in dem Versorgungskreis (88) zu bewirken,
- ein Mittel (89) zum Öffnen des Kreises im Fall des Auftretens des Stromstoßes, wobei der Temperatursensor (83) und der Stromstoßschalter (87) unabhängig voneinander positioniert sind,
wobei die Heizvorrichtung dazu ausgelegt ist, ein Signal des Temperatursensors (83) zu dem Stromstoßschalter (87) zu übertragen,
wobei die Heizvorrichtung eine Kurzschlussleitung (881) parallel zu dem elektrischen Heizelement (4) umfasst,
wobei die Kurzschlussleitung ein erstes Ende (881a) und ein zweites Ende (881b) umfasst, **dadurch gekennzeichnet, dass** der Stromstoßschalter (87) in der Kurzschlussleitung (881) montiert ist und dass die Heizvorrichtung ferner einen stromaufwärtigen Schalter (82A) und einen stromabwärtigen Schalter (82B) umfasst, die in Reihe mit dem elektrischen Heizelement (4) angeschlossen sind,
wobei das elektrische Heizelement zwischen dem stromaufwärtigen Schalter (82A) und dem stromabwärtigen Schalter (82B) positioniert ist, wobei mindestens einer der stromaufwärtigen und stromabwärtigen Schalter dazu ausgelegt ist, einen in dem elektrischen Heizelement fließenden Strom zu regulieren.

2. Heizvorrichtung nach dem vorhergehenden Anspruch, umfassend ein Mittel zur Übertragung des Signals zwischen dem Temperatursensor (83) und dem Stromstoßschalter (87).

3. Heizvorrichtung nach dem vorhergehenden Anspruch, wobei das Mittel zur Übertragung des Signals einen elektrischen Leiter umfasst.

4. Heizvorrichtung nach dem vorhergehenden Anspruch, die einen Mikrocontroller (84) umfasst, der in der Lage ist, den Stromstoßschalter (87) zu steuern, und bei der das Mittel zur Übertragung des Signals die Verbindung zwischen dem Temperatursensor (83) und dem Mikrocontroller gewährleistet.

5. Heizvorrichtung nach einem der vorhergehenden Ansprüche, wobei das erste Ende (881a) der Kurzschlussleitung (881) unmittelbar stromauf des elektrischen Heizelements (4) positioniert ist und/oder das zweite Ende (881b) der Kurzschlussleitung (881) unmittelbar stromab des elektrischen Heizelements (4) positioniert ist.

6. Heizvorrichtung nach einem der Ansprüche 1 bis 4, wobei das erste Ende (881a) der Kurzschlussleitung (881) stromauf des stromaufwärtigen Schalters (82A) positioniert ist und/oder das zweite Ende (881b) der Kurzschlussleitung (881) stromab des stromabwärtigen Schalters (82B) positioniert ist.

7. Heizvorrichtung nach einem der vorhergehenden Ansprüche, wobei das Mittel (89) zum Öffnen des Kreises (88) mindestens eine Sicherung (891) umfasst, die stromauf des ersten Endes (881a) der Kurzschlussleitung (881) oder stromab des zweiten Endes (881b) der Kurzschlussleitung (881) montiert ist, wobei die Sicherung dazu ausgelegt ist, das elektrische Heizelement (4) bei einem gleichzeitigen Ausfall des stromaufwärtigen Schalters (82A) und des stromabwärtigen Schalters (82B) zu schützen.

8. Heizvorrichtung nach einem der vorhergehenden Ansprüche, umfassend eine Fluidzirkulationskammer (21) und eine Leiterplatte (81) zum Steuern eines elektrischen Stroms, der das oder die elektrischen Heizelemente (4) durchquert, wobei der Temperatursensor (83) auf der Leiterplatte (81) montiert ist, wobei die Vorrichtung ferner einen Kühlkörper (9) zwischen der Fluidzirkulationskammer (21) und der Leiterplatte (81) umfasst.

## Claims

1. Electric fluid heating device, in particular for a motor vehicle, comprising:
- at least one electric heating element (4) intended to heat the fluid,
- a temperature sensor (83) intended to provide information on the temperature of the fluid,
- a power supply circuit (88) for said one or more electric heating elements,
- a switch (87), called the inrush current switch, intended to create an inrush current in said power supply circuit (88),
- a means (89) for opening said circuit in the event of said inrush current occurring, the temperature sensor (83) and the inrush current switch (87) being positioned independently of one another,
the heating device being configured to transmit a signal from the temperature sensor (83) to the inrush current switch (87),
the heating device comprising a short circuit line (881) in parallel with the electric heating element (4), said short circuit line comprising a first end (881a) and a second end (881b), **characterized in that** the inrush current switch (87) is mounted on said short circuit line (881) and **in that** the heating device further comprises an upstream switch (82A) and a downstream switch (82B) which are connected in series with the electric heating element (4), said electric heating element being positioned between said upstream switch (82A) and said downstream switch (82B), at least one of said upstream and downstream switches being configured to regulate a current circulating in said electric heating element.

2. Heating device according to the preceding claim, comprising a means for transmitting the signal between the temperature sensor (83) and the inrush current switch (87) .

3. Heating device according to the preceding claim, wherein the means for transmitting the signal comprises an electrical conductor.

4. Heating device according to the preceding claim, comprising a microcontroller (84) able to control the inrush current switch (87), and wherein the means for transmitting the signal provides the connection between the temperature sensor (83) and said microcontroller.

5. Heating device according to any one of the preceding claims, wherein the first end (881a) of the short-circuit line (881) is positioned directly upstream of the electric heating element (4), and/or the second end (881b) of the short-circuit line (881) is positioned directly downstream of said electric heating element (4).

6. Heating device according to any one of Claims 1 to 4, wherein the first end (881a) of the short-circuit line (881) is positioned upstream of the upstream switch (82A) and/or the second end (881b) of the short-circuit line (881) is positioned downstream of the downstream switch (82B) .

7. Heating device according to any one of the preceding claims, wherein the means (89) for opening the circuit (88) comprises at least one fuse (891) mounted upstream of the first end (881a) of the short-circuit line (881) or downstream of the second end (881b) of the short-circuit line (881), said fuse being configured to protect the electric heating element (4) in the event of simultaneous failure of the upstream switch (82A) and of the downstream switch (82B).

8. Heating device according to any one of the preceding claims, comprising a chamber (21) for circulation of the fluid and a circuit board (81) for controlling an electric current flowing through the one or more electric heating elements (4), wherein the temperature sensor (83) is mounted on said circuit board (81), said device further comprising a heat sink (9) between said chamber (21) for circulation of the fluid and said circuit board (81) .
